# EUROPEAN PATENT APPLICATION

(11) **EP 0 740 899 A1**
(43) Date of publication of application: **06.11.1996**
(21) Application number: 95938009.8
(22) Date of filing: 15.11.1995
(51) Int. Cl.: A01G 9/14, A01G 9/24

(54) **GREEN HOUSE**

(30) Priority: 16.11.1994 JP 305736/94
(71) Applicant: Mogami, Shotaro, Kamakura-shi, Kanagawa-ken 247 (JP)
(72) Inventor: Mogami, Shotaro, Kamakura-shi, Kanagawa-ken 247 (JP)
(74) Representative: Debay, Yves
(86) International application number: JP9502330
(87) International publication number: WO9614733

(57) **Abstract**

A heating type green house, for which an optimum temperature control suitable for a desired vegetation can be performed with a small heating cost, and a non-heating type green house having a good heat insulating performance are provided by constituting a major portion of a base section of the green house or at least a surface layer of the base section on an indoor side by a heat insulating material, through which water will not permeate, in particular, a foaming resin.

## Description

### TECHNICAL FIELD

The present invention relates to heated and non-heated greenhouses.

### BACKGROUND TECHNOLOGY

In temperate and arctic areas, in order to grow tropical plants which have no cold resistance, a green house equipped with a heating system is necessary. Many different sizes and types of greenhouses are used.

For use in an individual's yard, the size of the greenhouse is limited, and generally it is on a small scale of about 2-10m².

Using the least amount of heating expenses, the heated greenhouse must maintain a minimum temperature that is within the optimum temperature range for the plant being grown, typically 13-20 degrees C. Furthermore, the difference in temperature between day and night must he appropriately maintained. There also must not be a large temperature gradient within the greenhouse.

For these reasons, in the winter, a transparent curtain may be set up, or a transparent resin film may be used as a wall lining. These are not very effective, and a great deal of heating expenses is required.

This problem is especially severe in a small scale greenhouse of about 2-10m². For instance, in a greenhouse of 2-3m² in Kamakura City (north latitude 45 degrees on the Pacific coast), which is near Tokyo, Japan, even if a 1kW electric heater operates continuously all night, it is difficult to maintain a minimum temperature above 5-7 degrees C. For this reason, tropical and even temperate plants have difficulty surviving the winter. As a result many orchids, succulents, and foliage plants were difficult to cultivate.

In order to solve this problem, if the number of electric heaters is increased or if the capacity of each heater is increased, not only will the equipment costs and electricity costs for heating increase, but a large temperature and humidity gradient will be created within the greenhouse. Particularly near the heat vent opening, there will be localized high temperature, low humidity area, and this will result in death or decreased growth of the plant.

Traditionally, heat loss from the greenhouse was thought to be a result of the heat from the heated air within the greenhouse flowing out by heat conduction through the framework structure or the glass of the greenhouse.

The present invention is based on the finding that a large proportion of the heat loss is not from the path described above, but through a different path or mechanism.

Normally the floor and foundation of the greenhouse (these together will be referred to as the base) is made of a porous and highly absorbent mineral substance such as dirt, concrete, or a concrete block. Even though the surface may appear to be dry, the center is in a constant state of excess moisture due to water sprinkling, dew condensation, rain water, and water infiltration from the ground. From this center, the water is constantly and freely infiltrating and diffusing towards the surface layer.

Usually, the heat input is supplied by warm air from the heater directed towards the floor.

The humidity within the greenhouse, especially when the temperature within the greenhouse decreases, is very high at around 90%. But the warm air which has been heated by an electric heater or an oil heater has low humidity. When the warm air hits the floor, a great deal of evaporation takes place. A large proportion of the heat input is consumed by this latent heat of evaporation.

This air, which contains a large amount of water vapor due to this evaporation, produces dew when it comes into contact with the framework or glass which has been cooled by the outside air. When this occurs, the latent heat of condensation is carried to the outside and the moisture resulting from the dew circulates back to the base and wets the base. The moisture infiltrates into the concrete or concrete block and comes into contact with the heated air from the heater and evaporates again.

Furthermore, the underside of the base is always in contact with the wet ground which supplies additional moisture.

Thus, the water vapor within the greenhouse functions as a heat carrier within a heat pipe. The porous material of the base, due to its capillary action, functions as the whiskers on the inside wall of the heat pipe as it rapidly transports the heat carrier which has condensed into liquid form. Due to the above mechanism, the heat input is effectively released outside the greenhouse.

As shown, the quantity of heat carried by the water vapor from the base directly to the framework or glass of the greenhouse does not participate in temperature maintenance of the air within the greenhouse and is lost to the outside. Although it will depend on the structure and the scale of the greenhouse, types of materials used, and climate conditions, the ratio of this heat loss to the heat loss due to heat conduction occurring through the framework or the glass has shown to be very high.

### DISCLOSURE OF THE INVENTION

The present invention is based on the above standpoint. The objects of the present invention are to provide a heated greenhouse that will be able to maintain the optimum minimum temperature for the desired plants for the least amount of heating expenses and also to provide a non-heated greenhouse which will have good heat retention.

The object of the present invention is achieved by eliminating the water vapor environment inside the greenhouse.

Stated more concretely, the main point of the present invention is to build the main part of the base, or at least the indoor surface of the base, using a water impermeable heat insulating material, in particular a foamed resin. Stated more concretely, the main part of the base is to be covered with a water impermeable foamed resin layer or else the base itself is to be constructed with foamed resin.

When constructed in this way, there is no longer a limitless supply of moisture from the greenhouse base of the ground. The water droplets condensing on the aluminium framework or the glass of the greenhouse will travel along the lower rail of the sash and flow to the outside or infiltrate to the ground through the drain in the floor, and thereby preventing re-evaporation within the greenhouse. Since water vapor of the greenhouse is released through spaces in the skylight and fittings, and the reformation of the water vapor does not occur, the vapor pressure of the greenhouse decreases. Dew condensation decreases, and as a result the heat pipe mechanism inside the greenhouse is terminated.

In the preferred embodiment, the base itself is a block which has a core of low density foamed resin and at least some portion of the surface of the core which is covered with a high density foamed resin layer. This low density foamed resin is a heat insulating material, and the high density foamed resin creates a surface protective layer.

The base of a small greenhouse will be constructed as a single box structure. Medium size and larger greenhouses will have a plurality of segments. In other words, it is recommended that the base be constructed by linking together at least one floor segment and a plurality of foundation segments.

In large greenhouses, the main part of the foundation is constructed from mineral material such as concrete, brick, or concrete block. The inside surface is covered with a layer of foamed resin which is water impermeable. The foamed resin used for the surface covering should be a two-layer construction with a heat insulating low density foamed resin, and an upper layer laminate of a surface protective layer made of high density foamed resin.

The low density foamed resin used in the present invention should have as high of an expansion ratio as possible in order to have the most effective heat insulating effect and vapor preventing effect with the least amount of material. Nevertheless, if the expansion ratio is over 50 times, the mechanical strength and vibration resistance is lowered and becomes problematic. An expansion ratio less than 10 not only increases the amount of material needed, but also decrease the heat insulating properties and therefore is not suitable. Therefore, a low density foamed resin with a expansion ratio greater than 10 and less than 50 is used. The ideal expansion ratio is greater than 20 and less than 30.

From the standpoint of mechanical strength, abrasion resistance, impact resistance, and tenacity, the high density foamed resin which will be the protective layer needs an expansion ratio greater than 0 and less than 10. The ideal expansion ratio is greater than 0 and less than 2. Furthermore, it is recommended that this resin which forms the protective layer have some fibers such as glass fibers or metal fibers for reinforcement.

It is also recommended that a suitable wire mesh, for example one with a 2-3 mm rule and 2-10 cm aperture, be placed for reinforcement on the ground plane of the box structure and segments.

For setting up in areas where the cold is severe and damage from frost or frozen soil are common, the base must be cube-shaped so that the lower part can be built underground 1-2m.

It is also desirable that the outer plane of the protective layer have a decorative layer such as a brick pattern or rock pattern.

The pillars, columns, rails, and beams of the framework which will be built on the foundation as well as the rails of the fittings and the sash bar can be made from any of the following materilas: fiber reinforced synthetic resin, aluminum, foamed resin covered aluminum, or wood.

The ceiling, fixed glass walls, glass windows, sash, and doors should be made a double layer glass construction whenever possible. It is also recommended that the glass on the interior side be a hot wire equipped glass. This way, the condensation of water inside the greenhouse can be controlled and the heat outflow due to the water vapor environment can be eliminated.

A shade curtain which can be opened and closed should also be set up between the two glasses of the double glass construction.

The greenhouse of the present invention, and particularly the smaller scale greenhouse, is light with a high center of gravity. When setting up, there is a need to anchor the greenhouse appropriately, or else flower boxes filled with soil must be placed on the perimeter of the base to act as weights.

The present invention is constructed as above. With the present invention, the heat input is not wasted. As a result, the present invention provides a heated greenhouse which can use a small amount of electricity efficiently to provide an optimal temperature control for plants. Even in a traditionally impractical small scale greenhouse, an efficient room temperature management becomes possible without producing any large uneven temperature distribution. The cultivation of not only temperate plants but also tropical plants, especially orchids, succulents, foliage plants, and fruit plants, become possible.

The present invention has good heat retaining properties and provides a non-heated greenhouse in which a variety of plants can be grown.

As long as some snow precautions are taken, with the present invention setting up greenhouses is now made possible even in cold areas where previously greenhouses could not be used.

### BRIEF DESCRIPTION OF THE DRAWINGS

Figure 1 is a perspective view of a greenhouse embodiment.
Figure 2 is a fragmentary broken out cross sectional view of a base primarily used for large greenhouses.
Figure 3 is a top view of a base used for a medium sized greenhouse.
Figure 4 is a cross section along line A-A of the base of Figure 3.
Figure 5 is a cross section along line B-B of the base of Figure 3.
Figure 6 is a longitudinal perpendicular cross sectional view and shows the interior structure of the foundation block which comprises the base.
Figure 7 is a longitudinal perpendicular cross section of a foundation block and shows a method of attachment for linking a floor block and a foundation block.
Figure 8 is similar to Figure 7 and is a longitudinal cross section of a foundation block and shows a method of attachment for linking a floor block and a foundation block.
Figure 9 is an enlarged fragmentary explanatory drawing showing one method of attachment for linking floor blocks to each other or foundation blocks to each other.
Figure 10 is fragmentary broken out cross sectional view of Figure 9 along the cutting plane line C-C.
Figure 11 is a fragmentary broken out cross sectional view of Figure 9 along the cuting plane line D-D.
Figure 12 is a fragmentary broken out cross sectional view of Figure 9 along the cutting plane line E-E.
Figure 13 is a section showing an embodiment of a foundation block and of a floor block.
Figure 14 is a section of another embodiment.
Figure 15 is a section of an embodiment of a greenhouse base to be used in cold regions.

### BEST MODE FOR CARRYING OUT THE INVENTION

Referring to the figures, the details of the present invention will be described.

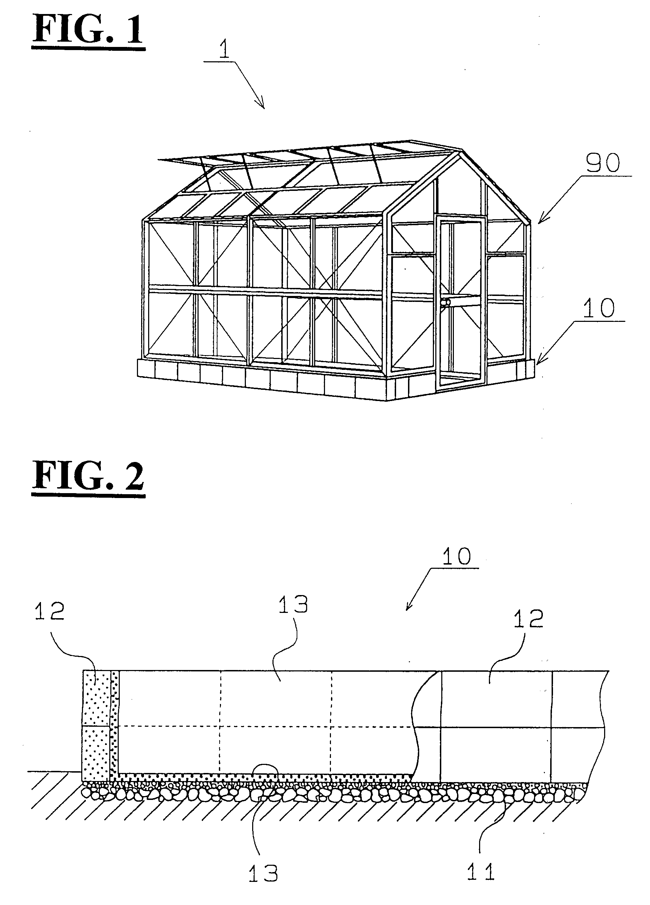

Referring to Figure 1, a greenhouse 1 comprises a base 10 and a house 90 built on top of base 10.

House 90 is known greenhouse comprised comprised of a framework including beams in the four corners, ridge poles, pillars; glass plated fittings including a glass ceiling, fixed sash windows, sash, skylight, door; as well as shade curtains and heating device and other accessories not shown.

For the present invention, house 90 may be as any of the known greenhouses, and may have improvements that will be indicated later. Stated more concretely, the body of house 90 may be made from aluminum, wood, fiber reinforced synthetic resin, heat insulate covered aluminum. The fittings may also be a single type with one sheet of glass or may be a double glass construction. The configuration of the sash and skylight may also be freely chosen.

Traditionally, the foundation of house 90 has been a heavy block or brick construction with the floor made of dirt or concrete. These materials are all porous, mineral material which is water permeable.

The point of the present invention, as mentioned above, is to have base 10 constructed or covered with a water impermeable foamed resin.

Referring to Figure 2, the embodiment shown is suitable for a large greenhouse. The main part of the base is the same as in prior art and has a concrete floor 11 and a foundation 12 of a heavy block construction. A covering 13, made of foamed resin, is placed on the interior surface of the base.

The foamed resin covering must be water impermeable, have sufficient insulation, and have mechanical strength. For this, as mentioned above, this covering should be a 2 layer construction with a hard protective layer of either high density foamed resin or a non-foamed resin. The expansion ratio is noted previously.

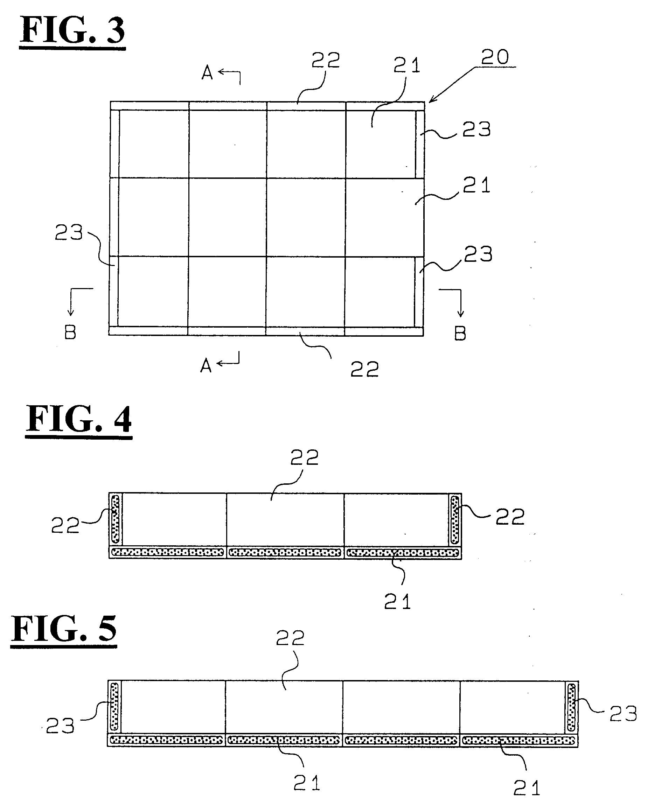

Referring to Figure 3, a base 20 for a medium size greenhouse is shown. Referring to Figure 4 and 5, a cross section along line A-A and a cross section along line B-B is shown.

This is a box-shaped structure created by linking together square shaped floor segments 21, 21, and rectangular foundation segments 22, 22, and 23. These are connected by an appropriate method such as adhesive or a mechanical fastener.

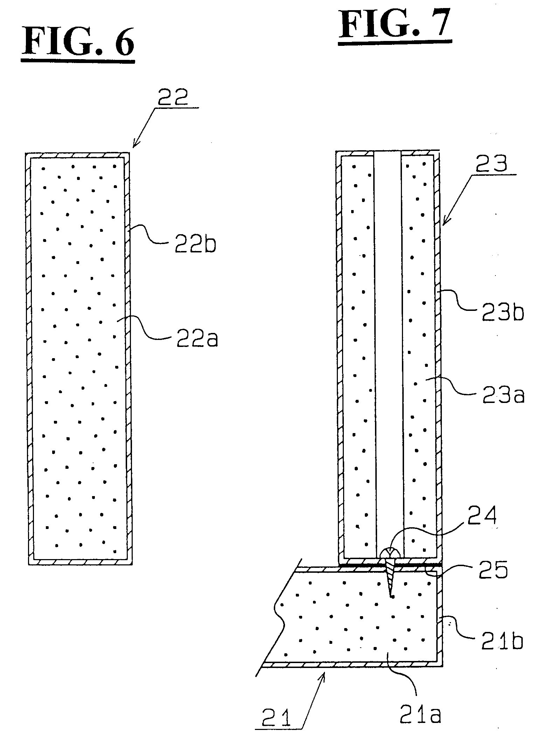

Referring to Figures 6 and 7, both floor segment 21 and foundation segment 22 has a core 21a and 22a made of low density foamed resin which is covered with a protective layer 21b and 22b made of high density foamed resin or non-foamed resin.

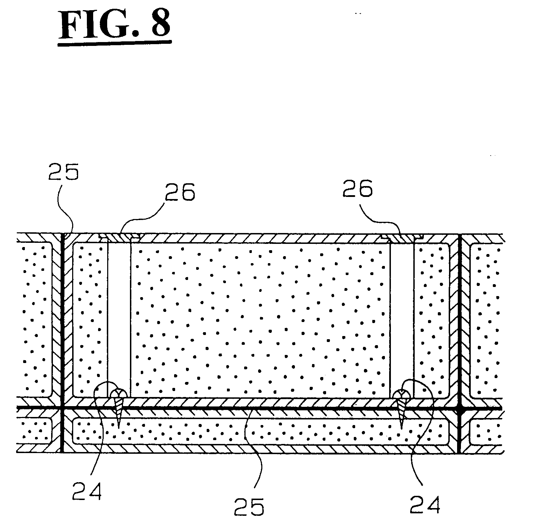

Referring to Figures 7 and 8, there is shown segments connected by a tapping screw 24 and an adhesive 25. There is also shown a screw insertion hole cap 26.

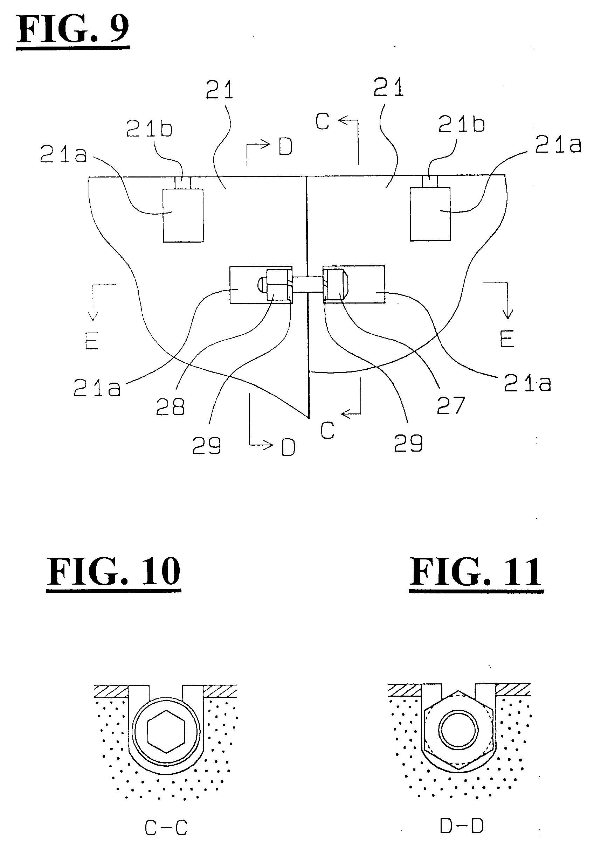

Referring to Figures 9 through 12, a method for connecting floor segments 21 is shown.

A hexagon socket head cap screw 27, a nut 28, a spring washer 29 are shown. These elements form a fastener which is inserted into a U-shaped hole 21a of floor segment 21. There is also a bolt insertion groove 21b in floor segment 21. Floor segments 21 can be linked to each other in this manner. Foundation segments may be linked together similarly.

In this way base 20 can be made from several segments.

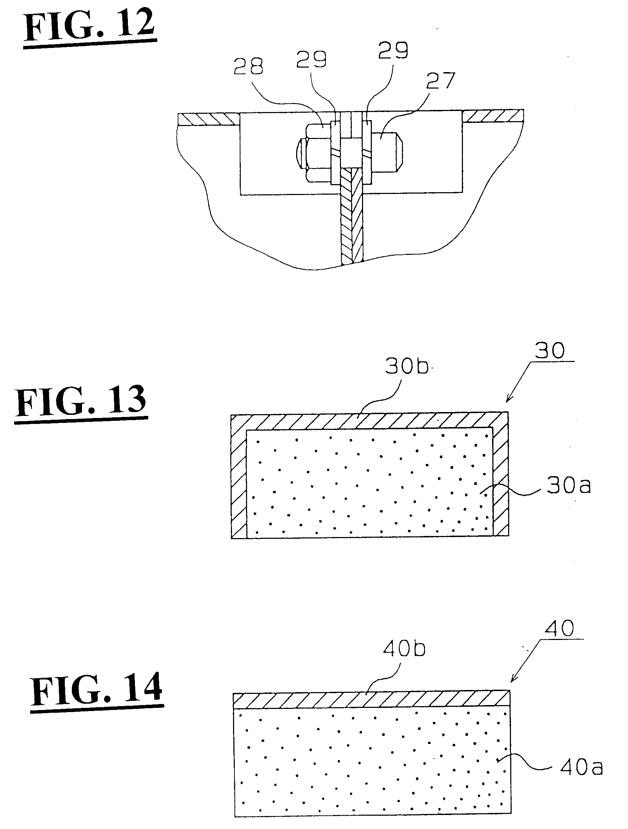

In the above explanation, each segment is formed from a core of low density foamed resin and a protective layer made from high density foamed resin which covers all of the surface. But the protective layer does not necessary have to cover all of the core surface. Referring to Figures 13 and 14, the core is only covered at necessary places, leaving part of the core uncovered.

Referring to Figure 13, there is shown a segment 30 which has a core 30a covered on the upper surface and sides with covering 30b, leaving the bottom uncovered. Referring to Figure 14, a segment 40 is shown with a core 40a covered only on the upper surface by covering 40b.

These segments are to be used along with segments 21, 22, and 23.

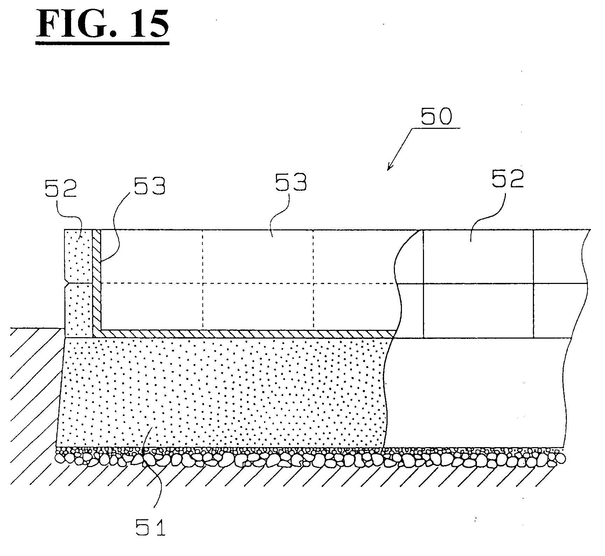

Referring to Figure 15, there is shown a base 50 for a greenhouse in an area with danger of frost and frozen soil damage. Base 50 consists of a large foamed resin block 51 which is approximately cube-shaped so that it can be buried deep in the ground, an upper foundation 52, and an interior protective layer 53. Block 51 and foundation 52 is composed of low density foamed resin; protective layer 53 is composed of high density foamed resin.

Block 51 is buried deeper than the predicted depth of the frozen ground, and thus avoids being pushed up by frost or frozen ground.

### INDUSTRIAL FEASIBILITY

The greenhouse of the present invention is more practical than the traditional greenhouses. It call be used widely from temperate to arctic areas as well as in high altitude areas. The present invention can provide new gardening methods and provide the joys of tropical plant cultivation to many gardeners. Embodiments may have great benefits industrially as well.

## Claims

1. A greenhouse comprising a base with at least an interior surface constructed with a layer of water impermeable foamed resin.

2. A greenhouse according to claim 1 comprising said base with a main part constructed from mineral material and with at least said interior surface covered with said water impermeable foamed resin layer.

3. A greenhouse according to claim 1 comprising said base with said main part constructed from water impermeable foamed resin.

4. A greenhouse according to claim 3 comprising said base with said main part constructed from a water impermeable, low density foamed resin core and a water impermeable, high density foamed resin layer which covers at least part of said core.

5. A greenhouse according to claim 3 or 4 comprising said base with a single box-structure construction.

6. A greenhouse according to claim 3 or 4 comprising said base constructed into a box-structure by linking a plurality of segments.

7. A greenhouse according to claim 6 comprising said base made from a plurality of segments with at least one floor segment and a plurality of foundation segments.

8. A greenhouse according to claim 4 through claim 7 comprising said base with a lower part that is approximately cube-shaped which can be buried deep into the ground and which is made of water impermeable foamed resin.

9. A greenhouse according to claim 4 through claim 8 comprising said core of low density foamed resin with an expansion ratio greater than 10 and less than 50.

10. A greenhouse according to claim 9 comprising said core of low density foamed resin with an expansion ratio greater than 20 and less than 30.

11. A greenhouse according to claim 4 through claim 10 comprising said core covered with said high density foamed resin with an expansion ratio greater than 0 and less than 10.

12. A greenhouse according to claim 11 comprising said core covered with said high density foamed resin with an expansion ratio greater than 0 and less than 2.

13. A greenhouse according to claim 11 comprising said core covered with said high density foamed resin with an expansion ratio of essentially 0.

14. A greenhouse according to claim 4 through claim 13 comprising fiber reinforcement of said high density foamed resin which forms said protective layer of said core.

15. A greenhouse according to claim 4 through claim 14 comprising said base reinforced with a wire mesh.

16. A greenhouse according to claim 2 through claim 15 comprising said base which has all its surface except the lower surface covered with said high density foamed resin.

17. A greenhouse according to claim 2 through claim 16 comprising a decorative layer on any part of said base.

18. A greenhouse according to claim 17 comprising said decorative layer which has a brick pattern.

19. A greenhouse according to claim 17 comprising said decorative layer which has a rock pattern.

20. A greenhouse according to claim 1 through claim 19 wherein a framework to be built on said base is constructed from a fiber reinforced synthetic resin.

21. A greenhouse according to claim 1 through claim 19 wherein said framework to be built on said base is constructed from aluminum.

22. A greenhouse according to claim 1 through claim 19 wherein said framework to be built on said base is constructed from a foamed resin covered aluminum.

23. A greenhouse according to claim 1 through claim 19 wherein said framework to be built on said base is constructed from wood.

24. A greenhouse according to claim 1 through 23 comprising a double glass construction in at least one of the following: ceiling, fixed glass walls, windows, sash, or door.

25. A greenhouse according to claim 24 comprising a hot wire equipped glass for the interior glass of a double glass construction.

26. A greenhouse according to claim 24 or 25 comprising a shade curtain that opens and closes in between the two glasses of said double glass construction.
